# FASCICULE DE BREVET EUROPEEN

(11) **EP 3 636 492 B1**
(45) Date de publication et mention de la délivrance du brevet: **12.05.2021**
(21) Numéro de dépôt: 19201699.6
(22) Date de dépôt: 07.10.2019
(51) Int. Cl.: B60Q 1/26, F21S 43/145, F21S 43/19, B60Q 1/00

(54) **ENSEMBLE DE VÉHICULE AUTOMOBILE COMPRENANT UN TISSU ÉCLAIRANT**
KRAFTFAHRZEUGEINHEIT, DIE EIN LEUCHTGEWEBE UMFASST
MOTOR VEHICLE ASSEMBLY COMPRISING A LIGHTING FABRIC

(30) Priorité: 12.10.2018 FR 1859502
(43) Date de publication de la demande: 15.04.2020
(73) Titulaire: Compagnie Plastic Omnium, 69007 Lyon (FR)
(72) Inventeur: KHAYAT, Issam, 69001 LYON (FR); ANDRE, Gérald, 01500 Saint Denis en Bugey (FR)
(74) Mandataire: LLR

(56) Documents cités:
- EP-A1- 3 330 127
- EP-A2- 0 933 588
- EP-A2- 2 889 529
- WO-A1-2008/035010
- DE-A1- 19 838 224
- FR-A1- 3 046 389
- FR-A1- 3 047 295
- US-A1- 2009 161 378

## Description

L'invention concerne le domaine de l'industrie automobile, et notamment les pièces de véhicule automobile comportant un dispositif éclairant, en particulier les pièces externes.

On connaît déjà des pièces externes de véhicule automobile pourvues d'une partie éclairante qui comprend un tissu éclairant. De telles pièces sont décrites par exemple dans la demande FR3046389. Un inconvénient de l'utilisation de ces tissus éclairants réside dans le fait qu'ils comportent nécessairement une zone technique non éclairante, généralement sur leur périphérie, dont la fonction est de permettre de relier les parties éclairantes du tissu à une source lumineuse. La présence de cette zone technique implique en général qu'une partie périphérique de la pièce externe ne comporte pas de zone éclairante, ce qui est gênant car il est souhaitable de pouvoir éclairer la pièce externe jusqu'à sa bordure. Ou bien, si l'on souhaite que la zone éclairante soit mise à affleurement avec le bord de la pièce, la zone technique présente un encombrement gênant et peut perturber les liaisons avec d'autres pièces

Un autre exemple de pièce externe de véhicule automobile pourvue d'un tissu éclairant est connu de US 2009/161378 A1.

L'invention a notamment pour but de fournir un ensemble de véhicule automobile muni d'un tissu éclairant permettant d'éclairer le véhicule de façon moins contraignante pour l'esthétique du véhicule.

A cet effet l'invention a pour objet un ensemble de véhicule automobile comprenant un tissu éclairant et un support de tissu éclairant, et comprenant plus particulièrement :
- un premier tissu éclairant comprenant une première partie éclairante et une première zone technique de jonction de la première partie éclairante à une source lumineuse,
- un second tissu éclairant comprenant une seconde partie éclairante et une seconde zone technique de jonction de la seconde partie éclairante à une source lumineuse,
- un support du premier tissu éclairant et du second tissu éclairant, la seconde partie éclairante étant disposée sur le support de façon à recouvrir la première zone technique.

Ainsi, grâce au fait que la seconde partie éclairante est placée sur la première zone technique, on peut éclairer des « zones mortes », non éclairées car techniques. De ce fait, la surface de l'ensemble peut être entièrement éclairante, et plus particulièrement la périphérie de la première partie éclairante.

Dans la présente description, on entend généralement par « tissu éclairant » un ensemble de fibres naturelles et/ou synthétiques comprenant des fibres optiques insérées à travers des mailles du tissu ou tissées avec les fibres naturelles ou synthétiques. D'autres types de tissus éclairants peuvent également être utilisés, par exemple la lumière peut être émise par des diodes électroluminescentes (LEDs) insérées dans un tissu.

Généralement, dans les tissus éclairants employés dans le cadre de l'invention, la zone technique de jonction d'une partie éclairante à une source lumineuse est située en périphérie de la partie éclairante, sur au moins un des bords du tissu éclairant. On comprend que la zone technique peut être non éclairante ou bien éclairante. Dans ce dernier cas, sa luminosité n'est en revanche pas satisfaisante pour assurer la fonction d'éclairage assurée par la partie éclairante.

Suivant d'autres caractéristiques optionnelles de l'ensemble de véhicule automobile, prises seules ou en combinaison :

- Le support est configuré pour être visible depuis l'extérieur du véhicule. Il est particulièrement intéressant de pouvoir éclairer l'extérieur du véhicule au moyen d'un tissu éclairant, et le fait de pouvoir éclairer les bords périphériques des pièces extérieures est avantageux car on sait que le design extérieur d'un véhicule, tout en alliant les contraintes d'assemblages des pièces, est une préoccupation des constructeurs automobiles. Parmi les avantages de l'utilisation d'un tissu éclairant pour l'extérieur du véhicule, on notera que le tissu éclairant est très souple par rapport à un dispositif d'éclairage classique, de sorte qu'en cas de choc il peut s'avérer être peu endommagé malgré sa relative fragilité, tout en pouvant se conformer facilement à des formes, notamment des galbes, de la pièce extérieure très variées. Par ailleurs, un tissu éclairant est peu encombrant et peut être facile à personnaliser en variant les couleurs de la lumière et/ou des motifs disposés au dessus du tissu. Ainsi, une application particulièrement intéressante est de proposer facilement à l'utilisateur une signature lumineuse personnalisée de son véhicule.

- Le support comprend une surface sensiblement plane de réception de la première partie éclairante, et une cavité de réception de la première zone technique, délimitée par une paroi en retrait par rapport à la surface de réception de la première partie éclairante, la seconde partie éclairante étant rapportée sur la cavité de réception de la première zone technique de façon à recouvrir la cavité de réception de la première zone technique.

Ainsi, on propose un renfoncement permettant de loger la première zone technique, cette forme du support permettant que la surface extérieure de l'ensemble apparaisse comme sensiblement plane, et sans aspérité.

- La première partie éclairante comprend au moins deux panneaux de tissus éclairants émettant chacun de la lumière de couleurs différentes, et le support du premier tissu éclairant comprend des nervures saillantes en regard des bords de chaque panneau pour assurer l'étanchéité lumineuse des bords des panneaux de la première partie éclairante.

On peut ainsi disposer des panneaux de tissus éclairants adjacents de couleur différente sans interférence de lumière sur les bords.

- Le support comprend une cavité de réception de la seconde zone technique, délimitée par une paroi en retrait par rapport à la surface de réception de la première partie éclairante.

Ainsi, de la même façon que pour la première zone technique, cette forme du support permet que la surface extérieure de l'ensemble apparaisse comme sensiblement plane, et sans aspérité.

On notera que les cavités de réception de la première zone technique et de la seconde zone technique peuvent être des cavités distinctes ou bien confondues.

- La cavité de réception de la première zone technique ou de la seconde zone technique est configurée de manière à accueillir la zone technique correspondante en respectant une courbure du tissu éclairant correspondant suffisamment faible pour ne pas endommager les fibres éclairantes.

Cette caractéristique est particulièrement utile dans le cas où le tissu éclairant comprend des fibres optiques.

- La paroi en retrait de la cavité de réception de la première zone technique ou de la seconde zone technique comprend au moins une ouverture traversante, destinée à recevoir un élément de raccordement du tissu éclairant à une source lumineuse. Un avantage réside dans le fait que la cavité permet de réserver un espace pour recevoir les éléments techniques du tissu éclairant, séparé de la source lumineuse. Il en résulte que l'on peut mieux protéger les éléments techniques et le tissu éclairants, qui sont fragiles et difficilement réparables, tout en disposant la source lumineuse à l'extérieur du logement, ce qui est particulièrement intéressant pour augmenter sa durée de vie. En effet, dans le cas où la source lumineuse est un module de LED, il est préférable qu'il ne soit pas confiné dans un logement fermé car cela impacte les performances de refroidissement de la LED, et donc sa durée de vie. En outre grâce à la configuration proposée, on dispose la source lumineuse dans une zone accessible, ce qui facilite sa maintenance. La source lumineuse peut également être déportée pour limiter les dégâts dus à un choc, et faciliter le changement de la zone endommagée.

- L'ensemble comprend un panneau de support de la seconde partie éclairante, recouvrant la première zone technique, le panneau de support étant de préférence opaque. Ainsi, on fait en sorte que la partie technique du premier tissu éclairant ne perturbe pas l'éclairage de la seconde partie éclairante.

- L'ensemble comprend deux seconds tissus éclairants séparés par un élément de décoration, cet élément de décoration recouvrant la seconde zone technique de chacun des deux seconds tissus éclairants.

L'élément de décoration permet ainsi avantageusement de cacher les zones techniques des deux seconds tissus éclairants. De manière alternative, on peut prévoir un seul second tissu éclairant et un élément de décoration recouvrant la seconde zone technique.

On notera d'autre part que les cavités de réception de chacune des secondes zones techniques peuvent être distinctes ou confondues. Dans le cas où elles sont confondues, une même cavité peut avantageusement accueillir les zones techniques des deux seconds tissus.

- L'ensemble comprend une pluralité de n tissus éclairants partiellement superposés, comprenant chacun une partie éclairante et une zone technique de jonction de la partie éclairante à une source lumineuse, la partie éclairante du tissu éclairant n étant disposée sur le support de façon à recouvrir la zone technique du tissu éclairant n-1. Dans ce cas, le nombre n est de préférence supérieur ou égal à 3.

- L'ensemble comprend un élément au moins partiellement transparent ou translucide destiné à recouvrir les tissus éclairants pour les protéger et éventuellement faire apparaître un motif lumineux.

- L'ensemble est configuré pour être rapporté sur une peau de pare-chocs.

### Brève description des figures

L'invention sera mieux comprise à la lecture de la description qui va suivre donnée uniquement à titre d'exemple et faite en se référant aux dessins annexés dans lesquels :
- la [Fig. 1] est une vue en perspective éclatée schématique d'un ensemble externe de véhicule automobile selon un mode de réalisation de l'invention.
- la [Fig. 2] est une section latérale partielle schématique de l'ensemble externe de la figure 1.
- la [Fig. 3] est une vue avant en perspective schématique de l'ensemble externe de la figure 1 monté sur une pièce extérieure de véhicule.

### Description détaillée

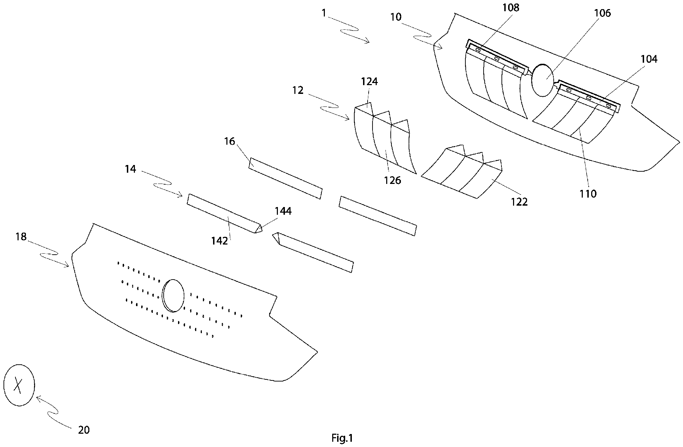

On a représenté sur la figure 1 un ensemble de véhicule automobile, désigné par la référence générale 1, selon un mode de réalisation de l'invention. L'ensemble 1 représenté sur la figure 1 est un ensemble de véhicule automobile.

L'ensemble de véhicule automobile 1 comprend un support 10 destiné à recevoir un premier tissu éclairant 12 et un second tissu éclairant 14. Le premier tissu éclairant 12 comporte une partie éclairante 122, dite « première partie éclairante » et une zone technique 124 dite «première zone technique ». Le second tissu éclairant 14 comporte une partie éclairante 142, dite « seconde partie éclairante » et une zone technique 144 dite « seconde zone technique ».

Les zones techniques 124 et 144 peuvent être non éclairantes ou bien éclairantes. Dans le cas où les zones techniques sont éclairantes, leur luminosité n'est, quoi qu'il en soit, pas satisfaisante pour assurer une fonction d'éclairage satisfaisante.

Dans la suite de la description on notera que :
- « première partie éclairante 122 » est synonyme de « partie éclairante 122 du premier tissu éclairant 12 »
- «première zone technique 124» est synonyme de «zone technique 124 du premier tissu éclairant 12 ». Cette zone technique est une zone de jonction du tissu éclairant à une source lumineuse,
- « seconde partie éclairante 142 » est synonyme de « partie éclairante 142 du second tissu éclairant 14 »
- « seconde zone technique 144 » est synonyme de « zone technique 144 du second tissu éclairant 14 ».

Les premier et second tissus éclairants 12, 14 sont disposés de manière à ce que la seconde partie éclairante 142 recouvre la première zone technique 124. Ainsi la face de l'ensemble 1 sur laquelle sont placés les tissus éclairants 12, 14 peut apparaître comme éclairée sur sensiblement toute sa surface lorsque les premier et second tissus éclairants 12, 14 sont alimentés par une source lumineuse.

Dans un mode de réalisation préféré, l'ensemble 1 est un ensemble externe, configuré pour être visible depuis l'extérieur du véhicule, par exemple l'ensemble 1 est une partie d'une pièce externe de véhicule, ou est rapporté sur une pièce externe d'un véhicule.

Il est particulièrement intéressant de pouvoir éclairer une pièce extérieure du véhicule au moyen d'un tissu éclairant, et le fait de pouvoir éclairer la périphérie des pièces extérieures est avantageux car on sait que le design extérieur d'un véhicule est une préoccupation des constructeurs automobiles, tout en nécessitant de prendre en compte les contraintes d'assemblages des pièces. Parmi les avantages de l'utilisation d'un tissu éclairant pour l'extérieur du véhicule, on notera que le tissu éclairant est très souple par rapport à un dispositif d'éclairage classique, de sorte qu'il peut se conformer facilement à des formes, notamment des galbes, de la pièce extérieure très variées. Par ailleurs, un tissu éclairant est peu encombrant et peut être facile à personnaliser en variant les couleurs de la lumière et/ou des motifs disposés au-dessus du tissu. Ainsi, une application particulièrement intéressante est de proposer facilement à l'utilisateur une signature lumineuse personnalisée de son véhicule.

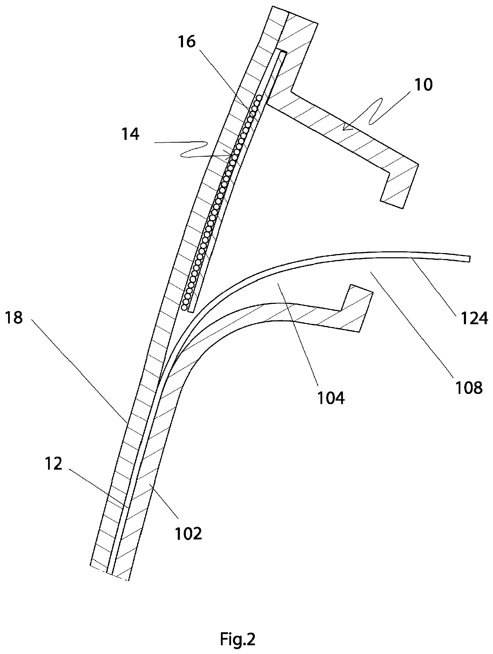

Dans un mode de réalisation, représenté par les figures 1 et 2, le support 10 destiné à recevoir les tissus éclairants 12, 14 comprend une surface sensiblement plane 102 de réception de la première partie éclairante 122, et comporte également une cavité 104 de réception de la première zone technique 124 délimitée par une paroi en retrait par rapport à la surface de réception 102 de la première partie éclairante 122. De cette manière, la première zone technique 124 peut être logée à l'intérieur de la cavité 104, et se trouve par conséquent en retrait de la surface de réception 102.

La partie éclairante 122 de premier tissu éclairant 12 peut être fixée à la partie plane du support de réception 102 par tout moyen approprié, par exemple par collage, ou par un moyen mécanique permettant d'accrocher le tissu éclairant 12 sur le support 10.

La partie éclairante 142 du second tissu éclairant 14 (aussi appelée seconde partie éclairante) est rapportée sur la cavité 104 de manière à recouvrir cette cavité. La zone technique 124 du premier tissu éclairant 12 est ainsi recouverte par la partie éclairante 142 du second tissu éclairant 14.

La seconde partie éclairante 142 est en outre de préférence disposée sensiblement dans le même plan que la première partie éclairante 122. Ainsi, la face extérieure de l'ensemble 1 apparaît comme étant sensiblement plane.

Le support 10 peut comprendre une cavité de réception 106 de la seconde zone technique 144. La cavité est délimitée par une paroi en retrait par rapport à la surface de réception 102 de la première partie éclairante 122. De cette manière, la seconde zone technique 144 peut être logée à l'intérieur de la cavité 106, et par conséquent elle se trouve en retrait de la surface de réception 102. Cela contribue également à ce que la face extérieure de l'ensemble 1 apparaisse comme étant sensiblement plane.

De préférence, les cavités 104 et 106 sont configurées de manière à accueillir les zones techniques respectives 124 et 144 en respectant une courbure suffisamment faible pour ne pas endommager les fibres éclairantes. En particulier, dans un mode de réalisation, les tissus éclairants 12, 14 comprennent des fibres optiques, qui ne sont pas aptes à être courbées selon un rayon trop faible sans risque d'endommagement.

Dans un mode de réalisation, représenté par la figure 1, la première partie éclairante 122 comprend une pluralité de panneaux de tissus éclairants 126 émettant de la lumière de couleurs différentes les uns des autres, et la surface sensiblement plane de réception 102 de la première partie éclairante 122 comprend des rainures saillantes 110 en regard des bords de chaque panneau 126 de façon à assurer l'étanchéité lumineuse des bords des différents panneaux 126 de la première partie éclairante 122.

De préférence, chacune des cavités de réception 104 et 106 comprend dans sa paroi en retrait au moins une ouverture traversante 108 destinée à recevoir un élément de raccordement du tissu éclairant 12, 14 à une source lumineuse. Ainsi le raccordement des tissus lumineux 12, 14 à une source lumineuse est rapide et aisé. Avantageusement, plusieurs ouvertures 108 sont ménagées dans la paroi de la cavité de réception 104, 106. Le plus souvent, mais cela n'est pas limitatif, une source lumineuse est prévue pour chaque ouverture 108.

Un autre avantage réside dans le fait que la cavité 104 permet de réserver un espace pour recevoir les éléments techniques du tissu éclairant, séparé de la source lumineuse. Il en résulte que l'on peut mieux protéger les éléments techniques et le tissu éclairants, qui sont fragiles et difficilement réparables, tout en disposant la source lumineuse à l'extérieur de la cavité 104, ce qui est particulièrement intéressant pour augmenter sa durée de vie. En effet, dans le cas où la source lumineuse est un module de LED, il est préférable qu'il ne soit pas confiné dans un logement fermé car cela impacte les performances de refroidissement de la LED, et donc sa durée de vie. En outre grâce à la configuration proposée, on dispose la source lumineuse dans une zone accessible, ce qui facilite sa maintenance. La source lumineuse peut également être déportée pour limiter les dégâts dus à un choc, et faciliter le changement de la zone endommagée.

Dans un mode de réalisation préférentiel, le second tissu éclairant 14 est reçu sur un support 16. Le support 16 est généralement un panneau ou une plaque de faible épaisseur, et dont les autres dimensions sont sensiblement similaires à celles de la seconde partie éclairante 142. Le support 16 est agencé sur la cavité de réception 104 de la première zone technique, et ferme la cavité. Ainsi, le panneau de support 16 de la seconde partie éclairante 142 recouvre la première zone technique 124. De préférence, le panneau 16 est opaque. Le panneau de support 16 donne une meilleure tenue mécanique au second tissu éclairant 14, et peut également permettre un montage plus facile et plus rapide du second tissu éclairant 14 sur le support 10. Le second tissu éclairant 14 est fixé au support 16 par tout moyen approprié, tel qu'un collage ou une fixation mécanique.

Dans un mode de réalisation, et ainsi que cela est représenté sur la figure 1, l'ensemble 1 peut comprendre deux seconds tissus éclairants 14, reçus éventuellement chacun par un support 16. Les deux tissus éclairants 14 peuvent être séparés par un élément de décoration 20. Les zones techniques 144 de chacun des deux seconds tissus 14 sont positionnées entre les deux tissus 14, et l'élément de décoration 20 recouvre ainsi la zone technique 144 de chacun des deux seconds tissus éclairants 14, ce qui permet de cacher les zones techniques 144 des deux seconds tissus éclairants 14.

On notera d'autre part que les cavités de réception 106 de chacune des secondes zones techniques 144 peuvent être distinctes ou confondues. Dans le cas où elles sont confondues, une même cavité 106 peut avantageusement accueillir les zones techniques 144 des deux seconds tissus éclairants 14.

Dans un mode de réalisation particulier, l'ensemble 1 comprend une pluralité de n tissus éclairants partiellement superposés, n étant de préférence supérieur à 3. Chacun des n tissus éclairants comprend une partie éclairante et une zone technique de jonction de la partie éclairante à une source lumineuse. La partie éclairante du tissu éclairant n est disposée sur le support 10 de façon à recouvrir la zone technique du tissu éclairant n-1.

En général, l'ensemble 1 comprend en outre un élément 18 au moins partiellement transparent ou translucide, rapporté sur le ou les tissus éclairants sur leur face opposée au support 10. Cet élément 18 est destiné à recouvrir les tissus éclairants 12, 14 pour les protéger. Dans certains cas, seule une partie de l'élément 18 est transparente ou translucide, de manière à faire apparaître un motif lumineux lorsque les tissus éclairants sont alimentés en lumière.

Dans le cas où l'ensemble 1 est un ensemble externe l'élément 18 est situé sur la face extérieure de l'ensemble externe lorsque celui-ci est installé sur le véhicule.

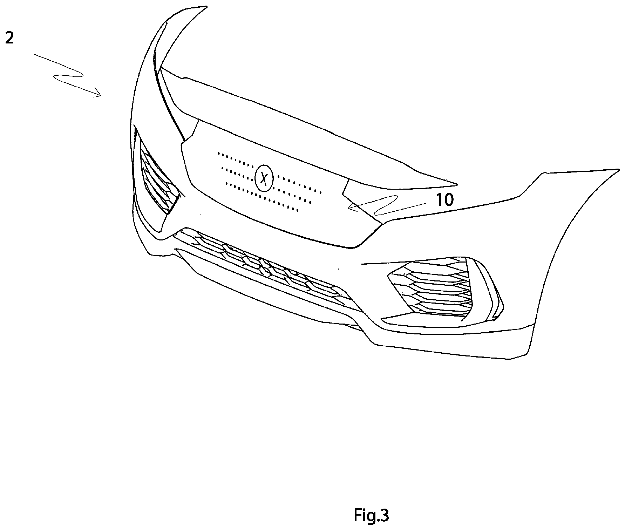

Ainsi que cela est représenté sur la figure 3, l'ensemble 1 peut être rapporté sur une peau de pare-chocs d'un véhicule. Il peut également être installé sur d'autres parties du véhicule sur lesquelles une fonction d'éclairage uniforme est souhaitée, ou bien sur lesquelles on souhaite créer un motif lumineux.

Le tableau suivant présente la liste des références utilisées sur les figures.

**[Table 1].**

| | |
|---|---|
| 1 | Ensemble de véhicule automobile |
| 10 | Support de tissus éclairants |
| 12 | Premier tissu éclairant |
| 122 | Partie éclairante du premier tissu éclairant / première partie éclairante |
| 124 | Zone technique du premier tissu éclairant / première zone technique |
| 14 | Second tissu éclairant |
| 142 | Partie éclairante du second tissu éclairant / seconde partie éclairante |
| 144 | Zone technique du second tissu éclairant / seconde zone technique |
| 16 | Support du second tissu éclairant |
| 18 | Elément de protection |
| 20 | Elément de décoration |
| 2 | Pièce extérieure de véhicule pourvue de l'ensemble 1 |

## Revendications

1. Ensemble de véhicule automobile (1) comprenant
- un premier tissu éclairant (12) comprenant une première partie éclairante (122) et une première zone technique (124) de jonction de la première partie éclairante (122) à une source lumineuse
**caractérisé en ce que** l'ensemble comprend:
- un second tissu éclairant (14) comprenant une seconde partie éclairante (142) et une seconde zone technique (144) de jonction de la seconde partie éclairante (142) à une source lumineuse et
- un support (10) du premier tissu éclairant (12) et du second tissu éclairant (14), la seconde partie éclairante (142) étant disposée sur le support (10) de façon à recouvrir la première zone technique (124).

2. Ensemble (1) selon la revendication précédente, configuré pour être visible depuis l'extérieur du véhicule.

3. Ensemble (1) selon l'une quelconque des revendications précédentes, dans lequel le support (10) comprend :
- une surface sensiblement plane (102) de réception de la première partie éclairante (122), et
- une cavité (104) de réception de la première zone technique (124), délimitée par une paroi en retrait par rapport à la surface de réception (102) de la première partie éclairante,
la seconde partie éclairante (142) étant rapportée sur la cavité de réception (104) de la première zone technique (124) de façon à recouvrir la cavité de réception de la première zone technique.

4. Ensemble (1) selon la revendication 3, dans lequel le support (10) comprend une cavité de réception (106) de la seconde zone technique (144), délimitée par une paroi en retrait par rapport à la surface de réception (102) de la première partie éclairante (122).

5. Ensemble (1) selon l'une quelconque des revendications précédentes, dans lequel :
- la première partie éclairante (122) comprend au moins deux panneaux de tissus éclairants (126) configurés pour émettre chacun de la lumière de couleurs différentes, et
- le support (10) comprend des nervures saillantes (110) en regard des bords de chaque panneau (126), pour assurer l'étanchéité lumineuse des bords des panneaux de la première partie éclairante.

6. Ensemble (1) selon l'une quelconque des revendications 3 à 5, dans lequel la cavité de réception (104, 106) de la première zone technique (124) ou de la seconde zone technique (144) est configurée de manière à accueillir la zone technique correspondante en respectant une courbure du tissu éclairant correspondant, suffisamment faible pour ne pas endommager les fibres éclairantes.

7. Ensemble (1) selon l'une quelconque des revendications 3 à 6, dans lequel la paroi en retrait de la cavité de réception (104,106) de la première zone technique (124) ou de la seconde zone technique (144) comprend au moins une ouverture traversante (108), destinée à recevoir un élément de raccordement du tissu éclairant à une source lumineuse.

8. Ensemble (1) selon l'une quelconque des revendications précédentes, comprenant un panneau de support (16) de la seconde partie éclairante (142), recouvrant la première zone technique (124), le panneau de support (16) étant de préférence opaque.

9. Ensemble (1) selon l'une quelconque des revendications précédentes comprenant deux seconds tissus éclairants (14) séparés par un élément de décoration (20), l'élément de décoration (20) recouvrant la seconde zone technique (144) de chacun des deux seconds tissus éclairants (14).

10. Ensemble (1) selon l'une quelconque des revendications précédentes comprenant une pluralité de n tissus éclairants (12,14) partiellement superposés, comprenant chacun une partie éclairante et une zone technique de jonction de la partie éclairante à une source lumineuse, la partie éclairante du tissu éclairant n étant disposée sur le support (10) de façon à recouvrir la zone technique du tissu éclairant n-1.

11. Ensemble (1) selon l'une quelconque des revendications précédentes comprenant en outre un élément au moins partiellement transparent (18) ou translucide destiné à recouvrir les tissus éclairants (12,14) pour les protéger et éventuellement faire apparaître un motif lumineux.

12. Ensemble (1) selon l'une quelconque des revendications précédentes, configuré pour être rapporté sur une peau de pare-chocs (2).

## Patentansprüche

1. Kraftfahrzeug-Baugruppe (1) aufweisend
- ein erstes Leuchtgewebe (12) mit einem ersten Leuchtabschnitt (122) und einem ersten technischen Bereich (124) zum Verbinden des ersten Leuchtabschnitts (122) an eine Lichtquelle, **dadurch gekennzeichnet, dass** die Baugruppe aufweist:
- ein zweites Leuchtgewebe (14) mit einem zweiten Leuchtabschnitt (142) und einem zweiten technischen Bereich (144) zum Verbinden des zweiten Abschnitts (142) an eine Lichtquelle und
- einen Träger (10) für das erste Leuchtgewebe (12) und das zweite Leuchtgewebe (14), wobei das zweite Leuchtabschnitt (142) auf dem Träger (10) so angeordnet ist, dass er den ersten technischen Bereich (124) abdeckt.

2. Baugruppe (1) nach dem vorhergehenden Anspruch, welche derart konfiguriert ist, dass sie von außerhalb des Fahrzeugs sichtbar ist.

3. Baugruppe (1) nach einem der vorhergehenden Ansprüche, wobei der Träger (10) aufweist:
- eine im Wesentlichen flache Oberfläche (102) zur Aufnahme des ersten Leuchtabschnitts (122), und
- einen Hohlraum (104) zur Aufnahme des ersten technischen Bereichs (124), welcher durch eine gegenüber der Aufnahmefläche (102) des ersten Leuchtabschnitts zurückgesetzte Wand begrenzt ist,
wobei der zweite Leuchtabschnitt (142) an dem Aufnahmehohlraum (104) des ersten technischen Bereichs (124) so angebracht ist, dass er den Aufnahmehohlraum des ersten technischen Bereichs abdeckt.

4. Baugruppe (1) nach Anspruch 3, wobei der Träger (10) einen Hohlraum (106) zur Aufnahme des zweiten technischen Bereichs (144) aufweist, der durch eine von der Aufnahmefläche (102) des ersten Leuchtabschnitts (122) zurückgesetzte Wand begrenzt ist.

5. Baugruppe (1) nach einem der vorhergehenden Ansprüche, wobei:
- der erste Leuchtabschnitt (122) mindestens zwei beleuchtende Stoffpaneele (126) aufweist, die jeweils so konfiguriert sind, dass sie Licht in verschiedenen Farben emittieren, und
- der Träger (10) vorspringende Rippen (110) aufweist, die den Rändern jeder Platte (126) zugewandt sind, um die leuchtende Abdichtung der Ränder der Platten des ersten Leuchtabschnitts zu gewährleisten.

6. Baugruppe (1) nach einem der Ansprüche 3 bis 5, wobei der Aufnahmehohlraum (104, 106) des ersten technischen Bereichs (124) oder des zweiten technischen Bereichs (144) derart eingerichtet ist, dass er den entsprechenden technischen Bereich unter Beachtung einer Krümmung des entsprechenden Leuchtgewebes aufnimmt, die ausreichend klein ist, um die Leuchtfasern nicht zu beschädigen.

7. Baugruppe (1) nach einem der Ansprüche 3 bis 6, wobei die Wand Ausnehmung (104, 106) des ersten technischen Bereichs (124) oder des zweiten technischen Bereichs (144) mindestens eine Durchgangsöffnung (108) aufweist, die dazu bestimmt ist, ein Element zum Verbinden des Lichtgewebes mit einer Lichtquelle aufzunehmen.

8. Baugruppe (1) nach einem der vorhergehenden Ansprüche, mit einer Trägerplatte (16) des zweiten Leuchtabschnitts (142), die den ersten technischen Bereich (124) abdeckt, wobei die Trägerplatte (16) vorzugsweise lichtundurchlässig ist.

9. Baugruppe (1) nach einem der vorhergehenden Ansprüche, umfassend zwei zweite Leuchtgewebe (14), die durch ein dekoratives Element (20) getrennt sind, wobei das dekorative Element (20) den zweiten technischen Bereich (144) jedes der beiden zweiten Leuchtgewebe (14) abdeckt.

10. Baugruppe (1) nach einem der vorhergehenden Ansprüche mit einer Vielzahl von *n* teilweise übereinanderliegenden Leuchtgeweben (12, 14), die jeweils einen Leuchtabschnitt und eine technische Zone zum Verbinden des Leuchtabschnitts mit einer Lichtquelle aufweisen, wobei der Leuchtabschnitt des Leuchtgewebes n auf dem Träger (10) derart angeordnet ist, dass er die technische Zone des Leuchtgewebes *n-1* abdeckt.

11. Baugruppe (1) nach einem der vorhergehenden Ansprüche, die ferner ein zumindest teilweise transparentes (18) oder lichtdurchlässiges Element umfasst, das dazu bestimmt ist, die Leuchtgewebe (12, 14) zu bedecken, um sie zu schützen und möglicherweise ein Leuchtmuster zu zeigen.

12. Baugruppe (1) nach einem der vorhergehenden Ansprüche, konfiguriert zur Befestigung an einer Stoßfängerhaut (2).

## Claims

1. An assembly (1) of motor vehicle, comprising:
- a first illuminating fabric (12) comprising a first illuminating part (122) and a first technical zone (124) for junction of the first illuminating part (122) to a light source, **characterized in that** the assembly comprises:
- a second illuminating fabric (14) comprising a second illuminating part (142) and a second technical zone (144) for junction of the second illuminating part (142) to a light source, and
- a support (10) for the first illuminating fabric (12) and the second illuminating fabric (14), the second illuminating part (142) being arranged on the support (10) so as to cover the first technical zone (124).

2. Assembly (1) according to the preceding claim, configured to be visible from outside the vehicle.

3. Assembly (1) according to any one of the preceding claims, wherein the support (10) comprises:
- a substantially flat surface (102) for receiving the first illuminating part (122), and
- a cavity (104) for receiving the first technical zone (124), delimited by a wall recessed from the surface (102) for receiving the first illuminating part,
the second illuminating part (142) being attached to the cavity (104) for receiving the first technical zone (124) so as to cover the cavity for receiving the first technical zone.

4. Assembly (1) according to claim 3, wherein the support (10) comprises a cavity (106) for receiving the second technical zone (144), delimited by a wall recessed relative to the surface (102) for receiving the first illuminating part (122).

5. Assembly (1) according to any one of the preceding claims, wherein:
- the first illuminating part (122) comprises at least two illuminating fabric panels (126) configured to each emit light of different colors, and
- the support (10) comprises projecting ribs (110) facing the edges of each panel (126), to ensure the luminous tightness of the edges of the panels of the first illuminating part.

6. Assembly (1) according to any one of claims 3 to 5, wherein the cavity (104, 106) for receiving the first technical zone (124) or the second technical zone (144) is configured to accommodate the corresponding technical zone while respecting a curvature of the corresponding illuminating fabric which is small enough so as not to damage the illuminating fibers.

7. Assembly (1) according to any one of claims 3 to 6, wherein the recessed wall of the cavity (104,106) for receiving the first technical zone (124) or the second technical zone (144) comprises at at least one through opening (108) which is intended to receive an element for connecting the illuminating fabric to a light source.

8. Assembly (1) according to any one of the preceding claims, comprising a panel (16) for supporting the second illuminating part (142), covering the first technical zone (124), the supporting panel (16) being preferably opaque.

9. Assembly (1) according to any one of preceding claims, comprising two second illuminating fabrics (14) separated by a decorative element (20), the decorative element (20) covering the second technical zone (144) of each of the two second illuminating fabrics (14).

10. Assembly (1) according to any one of the preceding claims, comprising a plurality of n illuminating fabrics (12,14) partially superimposed, each comprising an illuminating part and a technical zone for junction of the illuminating part to a light source, the illuminating part of the illuminating fabric n being arranged on the support (10) so as to cover the technical zone of the illuminating fabric n-1.

11. Assembly (1) according to any one of the preceding claims, further comprising an element which is at least partially transparent (18) or translucent and intended to cover the illuminating fabrics (12,14) to protect them and possibly reveal a light pattern.

12. Assembly (1) according to any one of the preceding claims, configured to be attached to a bumper skin (2).
